# EUROPÄISCHE PATENTANMELDUNG

(11) **EP 4 506 676 A1**
(43) Veröffentlichungstag der Anmeldung: **12.02.2025**
(21) Anmeldenummer: 24192768.0
(22) Anmeldetag: 05.08.2024
(51) Int. Cl.: G01M 17/02

(54) **VERFAHREN ZUR VISUELLEN KONTROLLE VON FAHRZEUGREIFEN BEI DER FERTIGUNG**

(30) Priorität: 10.08.2023 DE 102023207725
(71) Anmelder: Continental Reifen Deutschland GmbH, 30175 Hannover (DE)
(72) Erfinder: Rüther, Stephan, 30175 Hannover (DE); Mouliom, Herve, 30175 Hannover (DE); Schlöffel, Christian, 30175 Hannover (DE); Pedroza Yanez, Diana Gabriela, 30175 Hannover (DE)
(74) Vertreter: Continental Corporation

(57) **Zusammenfassung**

Verfahren zur visuellen Kontrolle von Fahrzeugreifen bei der Fertigung, aufweisend
- Ausrichten zumindest einer Laserquelle (2) auf eine Inspektionsregion (7) einer Oberfläche (6) des auf einer zylindrischen Reifenbautrommel (5) angeordneten Fahrzeugreifens und
- Ausrichten zumindest einer Kamera (3) auf die Inspektionsregion (7) der Oberfläche (6) des Fahrzeugreifens,
wobei die Kamera (3), die Laserquelle (2) und die Oberfläche (6) des Fahrzeugreifens derart zueinander ausgerichtet sind, dass die Kamera (3) eine diffuse Reflexion von Laserlicht aus der Laserquelle (2) an der Oberfläche (6) des Fahrzeugreifens empfängt, nicht jedoch eine spiegelnde Reflexion.

## Beschreibung

Die vorliegende Erfindung betrifft ein Verfahren zur visuellen Kontrolle von Fahrzeugreifen bei der Fertigung sowie ein Verfahren zur Fertigung von Fahrzeugreifen, bei dem das Verfahren zur visuellen Kontrolle eingesetzt wird.

Bei der Fertigung von Fahrzeugreifen, insbesondere bei dem Schritt des Reifenaufbaus, bei dem die verschiedenen Elemente des Fahrzeugreifens auf der Reifenbautrommel zusammengefügt werden, werden visuelle Kontrollsysteme eingesetzt, um die Spleiß- und Materialgüte zu beurteilen. Dabei wird, wie beispielsweise in der EP 0 289 101 B1 beschrieben, an der Oberfläche des Fahrzeugreifens reflektiertes Licht mittels eines optischen Sensors empfangen und ausgewertet. Eine Herausforderung bei der visuellen Kontrolle ist dabei, dass die Reifenaufbautrommeln normalerweise eine glänzende Oberfläche aufweisen und das für den Reifenaufbau verwendete Material zum Teil dunkel ist und zum Teil glänzend.

Für eine ausreichende Bildqualität ist es dabei heute typischerweise notwendig, Laser der Klasse 3x einzusetzen. Dies macht entsprechende Sicherheitsvorkehrungen an der Anlage erforderlich sowie gegebenenfalls Veränderungen im Betriebsablauf.

Es ist daher eine Aufgabe der vorliegenden Erfindung, ein Verfahren zur visuellen Kontrolle von Fahrzeugreifen bei der Fertigung anzugeben, das einfach in bestehende Anlagen integrierbar ist, insbesondere ohne dass der Betriebsablauf und die vorhandenen Sicherheitsvorkehrungen verändert werden müssen.

Diese Aufgabe wird gelöst mit dem Gegenstand des unabhängigen Patentanspruchs. Weiterbildungen und vorteilhafte Ausführungsformen sind Gegenstand der abhängigen Ansprüche.

Gemäß einem Aspekt der Erfindung wird ein Verfahren zur visuellen Kontrolle von Fahrzeugreifen bei der Fertigung angegeben, aufweisend das Ausrichten zumindest einer Laserquelle auf eine Inspektionsregion einer Oberfläche des auf einer zylindrischen Reifenbautrommel angeordneten Fahrzeugreifens sowie das Ausrichten zumindest einer Kamera auf die Inspektionsregion der Oberfläche des Fahrzeugreifens. Dabei sind die Kamera, die Laserquelle und die Oberfläche des Fahrzeugreifens derart zueinander ausgerichtet, dass die Kamera eine diffuse Reflexion von Laserlicht aus der Laserquelle an der Oberfläche des Fahrzeugreifen, insbesondere an der Inspektionsregion, empfängt, nicht jedoch eine spiegelnde Reflexion.

Unter einer spiegelnden Reflexion wird hier und im Folgenden eine Reflexion verstanden, bei der ein Lichtstrahl auf eine glatte Oberfläche trifft, gegebenenfalls zu einem Anteil absorbiert wird und im Übrigen gemäß dem Reflexionsgesetz in einem Ausfallswinkel, der so groß ist wie der Einfallswinkel, reflektiert wird. Im Gegensatz dazu wird bei der diffusen Reflexion Licht an einer rauen Oberfläche diffus reflektiert, wobei die Reflexion dem Lambertschen Gesetz folgt und die Hauptrückstreuung senkrecht zur Oberfläche und unabhängig vom Einfallswinkel erfolgt. Es wird davon ausgegangen, dass an der Oberfläche des Fahrzeugreifens beide Arten von Reflexionen stattfinden und sich im reflektierten Licht überlagern. Dabei ist jedoch der Anteil an spiegelnd reflektiertem Licht in der Richtung, die dem nach dem Reflexionsgesetz bestimmten Ausfallswinkel entspricht, verhältnismäßig groß, während die diffuse Reflektion in anderen Winkelbereichen überwiegt.

Das Verfahren hat den Vorteil, dass es auch bei geringerer Laserleistung eine zuverlässige visuelle Kontrolle des Fahrzeugreifens bei der Fertigung erlaubt. Wie sich herausgestellt hat, lässt sich die Inspektionsregionen optisch in größerem Detail darstellen, wenn dafür nicht das spiegelnd reflektierte Laserlicht verwendet wird, sondern diffus reflektiertes Laserlicht.

Unter der Oberfläche des auf der Reifenbautrommel angeordneten Fahrzeugreifen wird hier und im Folgenden die Oberfläche der Elemente des Fahrzeugreifens verstanden, beispielsweise Karkasse, Gürtel oder Laufstreifen, die während des Reifenbaus zu dem Fahrzeugreifen zusammengefügt werden. Das Verfahren ermöglicht insbesondere die Kontrolle von Material und Spleißen während des Reifenbaus, wobei es, wie sich herausgestellt hat, ausreichend ist, einen Laser der Klasse 2M zu verwenden.

Gemäß einer Ausführungsform sind die zumindest eine Laserquelle und die zumindest eine Kamera als Einheit zueinander angeordnet, beispielsweise in einem gemeinsamen Gehäuse, und weisen einen fest vorgegebenen Abstand a zueinander auf. Die Einheit aus Laserquelle und Kamera ist relativ zur Reifenbautrommel beweglich.

Diese Ausführungsform hat den Vorteil, dass die Einheit zur visuellen Kontrolle des Fahrzeugreifens besonders kompakt und leicht ansteuerbar, einfach einzubauen und leicht zu wechseln ist.

Gemäß einer Ausführungsform erfolgt das Ausrichten der Kamera, der Laserquelle und der Oberfläche des Fahrzeugreifens zueinander derart, dass die Kamera eine diffuse Reflexion des Laserlichts empfängt, nicht jedoch eine spiegelnde Reflexion, durch das folgende Verfahren: Zunächst wird die Inspektionsregion mit Laserlicht aus der Laserquelle unter einem Einfallswinkel α bestrahlt. Eine direkte Reflexion dieses Laserlichts wird mittels der Kamera unter dem Ausfallswinkel α, jeweils zum Lot gemessen, empfangen. Dabei kann das reflektierte Signal dazu verwendet werden, die Einheit aus Laserquelle und Kamera anhand der empfangenen Reflexion relativ zur Oberfläche des Fahrzeugreifens derart auszurichten, dass das Gesichtsfeld der Kamera die Inspektionsregion umfasst. Insbesondere kann sich die Inspektionsregion über die gesamte Breite des Fahrzeugreifens erstrecken. In diesem Fall soll auch die gesamte Breite des Fahrzeugreifens im Gesichtsfeld der Kamera liegen und die Einheit aus Laserquelle und Kamera muss entsprechend ausgerichtet werden.

Das Verfahren umfasst ferner das neue Ausrichten der Einheit aus Laserquelle und Kamera durch Drehen um eine Drehachse parallel zu einer Symmetrieachse der Reifenbautrommel um einen Winkel β und/oder das Verschieben der Einheit aus Laserquelle und Kamera um eine Strecke b, so dass die Kamera keine direkte Reflexion des Laserstrahls an der Inspektionsregion mehr aufnimmt.

Durch das Verfahren wird sichergestellt, dass zunächst die Einstellung des Gesichtsfelds der Kamera anhand der spiegelnden Reflexion erfolgen kann, wobei anschließend Laserquelle und Kamera derart ausgerichtet werden, dass die Kamera gerade keine spiegelnde Reflexion mehr empfängt, sondern lediglich diffus reflektiertes Licht der Laserquelle.

Da die unter einem festgelegten Winkel aufgenommene diffuse Reflexion lichtschwächer ist als die unter dem Ausfallswinkel aufgenommene spiegelnde Reflexion, werden Sensoren der Kamera weniger schnell in Sättigung gebracht und es ist möglich, detailreichere Darstellungen der Inspektionsregion zu erhalten.

Gemäß einer Ausführungsform wird die Neuausrichtung der Einheit aus Laserquelle und Kamera in einem Speicher abgelegt, wobei es sich dabei insbesondere um den Speicher einer Rechnereinheit handelt, die die Einheit aus Laserquelle und Kamera ansteuert.

Das Ausrichten der Kamera, der Laserquelle und der Oberfläche des Fahrzeugreifen zueinander derart, dass die Kamera eine diffuse Reflexion des Laserlichts empfängt, nicht jedoch eine spiegelnde Reflexion, erfolgt erneut, wenn der Durchmesser der Reifenbautrommel verändert wird.

Wie sich herausgestellt hat, ist es ausreichend, die Kamera, die Laserquelle und die Oberfläche des Fahrzeugreifen vor der Inbetriebnahme der Anlage auszurichten. Die Position der Einheit wird dann für den normalen Betrieb in der Produktion gespeichert und weiterverwendet, bis sich die geometrischen Bedingungen insbesondere durch Verwendung einer anderen Reifenbautrommel ändern.

Da die Verwendung der diffusen Reflexion für die visuelle Kontrolle eine besonders detailreiche optische Darstellung erlaubt, ist es ausreichend, für die Laserquelle einen Laser der Klasse 2M zu verwenden, der keine besonderen Sicherheitsvorkehrungen erfordert.

Gemäß einem Aspekt der Erfindung wird ein Verfahren zur Fertigung von Fahrzeugreifen angegeben, wobei während der Fertigung eine visuelle Kontrolle einer Oberfläche des Fahrzeugreifens nach dem beschriebenen Verfahren erfolgt.

Die Fertigung des Fahrzeugreifens kann insbesondere das Aufbringen zumindest eines streifenförmigen Reifenaufbaumaterials auf der Reifenbautrommel umfassen und die visuelle Kontrolle kann insbesondere die visuelle Kontrolle eines Spleißes umfassen.

Ausführungsformen der Erfindung werden im Folgenden anhand schematischer Zeichnungen beispielhaft beschrieben.
- Figur 1: zeigt eine Vorrichtung zur visuellen Kontrolle von Fahrzeugreifen bei der Fertigung gemäß einer Ausführungsform der Erfindung in einer ersten Position und
- Figur 2: zeigt eine Vorrichtung zur visuellen Kontrolle von Fahrzeugreifen bei der Fertigung gemäß einer Ausführungsform der Erfindung in einer zweiten Position.

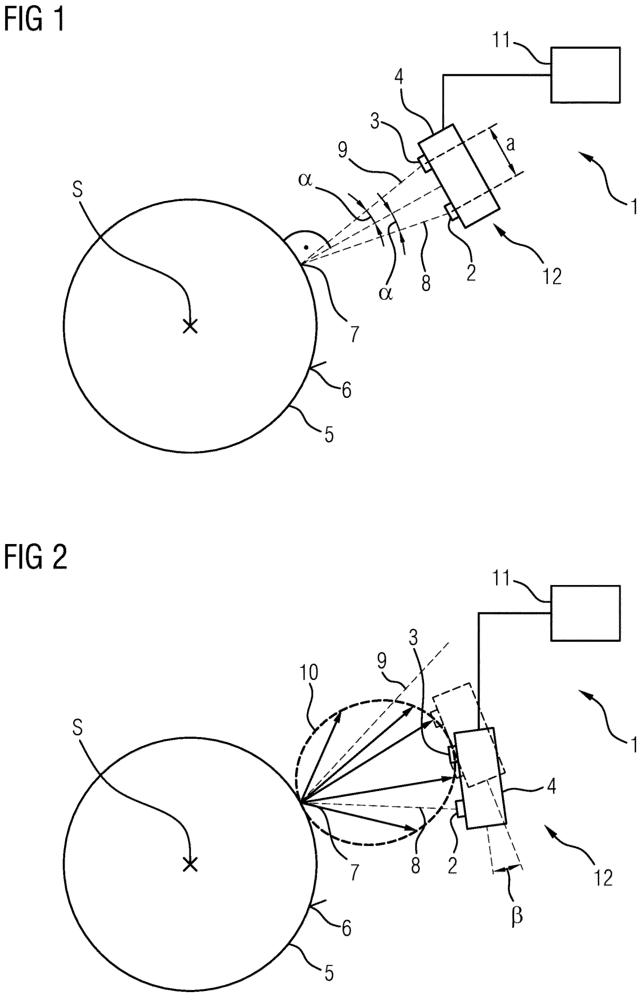

Figur 1 zeigt schematisch eine Vorrichtung 1 zur visuellen Kontrolle von Fahrzeugreifen bei der Fertigung. Die Vorrichtung 1 umfasst zumindest eine Laserquelle 2 und zumindest eine Kamera 3, die in der gezeigten Ausführungsform in einem gemeinsamen Gehäuse 4 angeordnet sind und somit eine bauliche Einheit 12 bilden.

Die Vorrichtung 1 dient zur visuellen Kontrolle von Fahrzeugreifen bei der Fertigung auf der zylindrischen Reifenbautrommel 5 mit der Symmetrieachse S.

Dazu sind die Laserquelle 2 und die Kamera 3 auf die Oberfläche 6 des auf der Reifenbautrommel 5 angeordneten, in der Figur 1 nicht näher gezeigten Fahrzeugreifens gerichtet. Insbesondere sind die Laserquelle 2 und die Kamera 3 auf eine Inspektionsregion 7 der Oberfläche 6 gerichtet. Die Inspektionsregion 7 ist definiert als derjenige Teil der Oberfläche 6, der zu einem bestimmten Zeitpunkt einer visuellen Kontrolle unterzogen werden soll.

In Figur 1 ist die Situation gezeigt, in der ein einfallender Laserstrahl 8 aus der Laserquelle 2 unter einem Einfallswinkel α auf die Oberfläche 6 trifft und an ihr spiegelnd reflektiert wird. Der reflektierte Laserstrahl 9 weist somit einen Ausfallswinkel α auf.

Die Laserquelle 2 und die Kamera 3 sind in dem Gehäuse 4 mit einem Abstand a zueinander angeordnet. Die Vorrichtung 1 ist in der in Figur 1 gezeigten Situation derart ausgerichtet, dass der reflektierte Laserstrahl 9 von der Kamera 3 detektiert wird, d.h. die Kamera ist im Winkelbereich des reflektierten Laserstrahls 9 platziert.

Mittels einer Steuereinrichtung 11 wird die Einheit 12 angesteuert. Damit kann insbesondere eine Position der Einheit 12 relativ zur Oberfläche 6 und der Inspektionsregion 7 gewählt werden.

Die in Figur 1 dargestellte Situation kann dazu dienen, das Gesichtsfeld der Kamera 3 passend zur Inspektionsregion 7 auszurichten. Für die eigentliche visuelle Kontrolle während der Fertigung wird jedoch die Position der Einheit 12 in einer Weise verändert, wie sie in Figur 2 dargestellt ist.

Figur 2 zeigt die Vorrichtung 1 gemäß Figur 1 in einer Situation, in der die Einheit 12 aus der Laserquelle 2 und der Kamera 3 gegenüber der in Figur 1 gezeigten Position gedreht und gegebenenfalls auch verschoben ist. Die in Figur 1 gezeigte Position der Einheit 12 ist in der Figur 2 mit einer gestrichelten Linie dargestellt.

Gegenüber der in Figur 1 gezeigten Position wurde die Einheit 12 um einen Winkel β um eine Achse parallel zur Symmetrieachse S der Reifenbautrommel 5 gedreht. Diese neue Ausrichtung der Einheit 12 wird in einem nicht gezeigten Speicher der Steuereinheit 11 abgelegt.

Die neue Ausrichtung hat zur Folge, dass der spiegelnd reflektierte Laserstrahl 9 nun nicht mehr auf die Kamera 3 trifft. Vielmehr detektiert die Kamera 3 lediglich das diffus an der Oberfläche 6 reflektierte Licht, das in Figur 12 durch eine Anzahl von Pfeilen und die Einhüllende 10 dargestellt ist. Das diffus reflektierte Licht weist gemäß dem Lambertschen Gesetz ein Maximum auf in der Richtung senkrecht zur Oberfläche 6. Während der reflektierte Laserstrahl 9 an der Einheit 12 und insbesondere der Kamera 3 vorbeigeht, empfängt die Kamera 3 das diffus reflektierte Licht nahe dem Maximum.

Durch die geringere Intensität des diffus reflektierten, durch die Kamera 3 detektierten Lichts lassen sich in der in Figur 2 gezeigten Situation auch bei der Verwendung eines Lasers der Klasse 2M sehr detaillierte Strukturen auflösen.

### Bezugszeichenliste

- 1: Vorrichtung
- 2: Laserquelle
- 3: Kamera
- 4: Gehäuse
- 5: Reifenbautrommel
- 6: Oberfläche
- 7: Inspektionsregion
- 8: einfallender Laserstrahl
- 9: reflektierter Laserstrahl
- 10: Einhüllende
- 11: Steuereinrichtung
- 12: Einheit

- S: Symmetrieachse
- a: Abstand
- α: Winkel
- β: Winkel

## Patentansprüche

1. Verfahren zur visuellen Kontrolle von Fahrzeugreifen bei der Fertigung, aufweisend
- Ausrichten zumindest einer Laserquelle (2) auf eine Inspektionsregion (7) einer Oberfläche (6) des auf einer zylindrischen Reifenbautrommel (5) angeordneten Fahrzeugreifens und
- Ausrichten zumindest einer Kamera (3) auf die Inspektionsregion (7) der Oberfläche (6) des Fahrzeugreifens,
wobei die Kamera (3), die Laserquelle (2) und die Oberfläche (6) des Fahrzeugreifens derart zueinander ausgerichtet sind, dass die Kamera (3) eine diffuse Reflexion von Laserlicht aus der Laserquelle (2) an der Oberfläche (6) des Fahrzeugreifens empfängt, nicht jedoch eine spiegelnde Reflexion.

2. Verfahren nach Anspruch 1,
wobei die zumindest eine Laserquelle (2) und die zumindest eine Kamera (3) als Einheit (12) zueinander angeordnet sind und einen fest vorgegebenen Abstand a zueinander aufweisen, wobei die Einheit (12) relativ zur Reifenbautrommel (5) beweglich ist.

3. Verfahren nach Anspruch 2,
wobei das Ausrichten der Kamera (3), der Laserquelle (2) und der Oberfläche (6) des Fahrzeugreifens zueinander derart, dass die Kamera (3) eine diffuse Reflexion des Laserlichts empfängt, nicht jedoch eine spiegelnde Reflexion, durch das folgende Verfahren erfolgt:
- Bestrahlen der Inspektionsregion (7) mit Laserlicht aus der Laserquelle (2) unter einem Einfallswinkel α,
- Empfangen einer spiegelnden Reflexion des Laserlichts mittels der Kamera (3) unter einem Ausfallswinkel α,
- Ausrichten der Einheit (12) aus Laserquelle (2) und Kamera (3) anhand der empfangenen Reflexion relativ zur Oberfläche (6) des Fahrzeugreifens, so dass das Gesichtsfeld der Kamera (3) die Inspektionsregion (7) umfasst, und
- Neuausrichten der Einheit (12) aus Laserquelle (2) und Kamera (3) durch Drehen um eine Drehachse parallel zu einer Symmetrieachse der Reifenbautrommel (5) um einen Winkel β und/oder Verschieben der Einheit (12) aus Laserquelle (2) und Kamera (3) um eine Strecke b, bis die Kamera (3) keine spiegelnde Reflexion des Laserstrahls an der Inspektionsregion (7) mehr aufnimmt.

4. Verfahren nach Anspruch 3,
wobei die Neuausrichtung der Einheit (12) aus Laserquelle (2) und Kamera (3) in einem Speicher abgelegt wird.

5. Verfahren nach Anspruch 3 oder 4,
wobei das Ausrichten der Kamera (3), der Laserquelle (2) und der Oberfläche (6) des Fahrzeugreifens zueinander derart, dass die Kamera (3) eine diffuse Reflexion des Laserlichts empfängt, nicht jedoch eine spiegelnde Reflexion, erneut erfolgt, wenn der Durchmesser der Reifenbautrommel (5) verändert wird.

6. Verfahren nach einem der Ansprüche 1 bis 5,
wobei eine Laserquelle (2) der Klasse 2M verwendet wird.

7. Verfahren zur Fertigung von Fahrzeugreifen,
wobei während der Fertigung eine visuelle Kontrolle einer Oberfläche (6) des Fahrzeugreifens gemäß dem Verfahren nach einem der Ansprüche 1 bis 6 erfolgt.

8. Verfahren nach Anspruch 7,
wobei die Fertigung des Fahrzeugreifens das Aufbringen zumindest eines streifenförmigen Reifenaufbaumaterials auf der Reifenbautrommel (5) umfasst und die visuelle Kontrolle die visuelle Kontrolle eines Spleißes umfasst.

9. Computerprogrammprodukt, umfassend Befehle, die bei der Ausführung des Programms durch einen Computer diesen veranlassen, das Verfahren gemäß einem der Ansprüche 1 bis 8 durchzuführen und damit zumindest eine Laserquelle (2) und zumindest eine Kamera (3) derart zu positionieren, dass die Kamera (3) eine diffuse Reflexion von Laserlicht aus der Laserquelle (2) an der Oberfläche (6) des Fahrzeugreifens empfängt, nicht jedoch eine spiegelnde Reflexion.
